# EUROPEAN PATENT APPLICATION

(11) **EP 4 725 834 A1**
(43) Date of publication of application: **15.04.2026**
(21) Application number: 25208122.9
(22) Date of filing: 10.10.2025
(51) Int. Cl.: B64C 11/30, B64C 11/32, B64C 29/00, B64D 35/026, B64D 27/31, B64D 27/34, B64D 27/357

(54) **AN ELECTRIC VERTICAL TAKE-OFF AND LANDING AIRCRAFT**

(30) Priority: 10.10.2024 GB 202414919
(71) Applicant: Vertical Aerospace Group Limited, BS2 0UW (GB)
(72) Inventor: THURLBECK, David John, Bristol, BS2 0UW (GB)
(74) Representative: EIP

(57) **Abstract**

An electric vertical take-off and landing aircraft is described. The electric vertical take-off and landing aircraft comprises an airframe, an electrical propulsion unit, and a pitch mechanism. The electrical propulsion unit comprises a blade and is configured to be tiltable relative to the airframe between a wing-borne flight configuration and a thrust-borne flight configuration. The pitch mechanism comprises a pitch actuator, which is configured to vary a pitch of the blade. The electric vertical take-off and landing aircraft is configured to limit a range within which the pitch actuator can vary the pitch of the blade to a larger pitch range when the electrical propulsion unit is in the wing-borne flight configuration and a smaller pitch range when the electrical propulsion unit is in the thrust-borne flight configuration.

## Description

### FIELD

The present invention relates to an Electric Vertical Take-Off and Landing (eVTOL) aircraft.

### BACKGROUND

EVTOL aircraft are aircraft which can take off vertically, transition to conventional, horizontal flight, and then transition back to vertical flight and land vertically. There is a general desire to improve the performance of eVTOL aircraft, which may include improving the fault tolerance of the eVTOL aircraft and improving the range of the eVTOL aircraft.

### SUMMARY

According to a first aspect, the present invention provides an electric vertical take-off and landing aircraft comprising: an airframe; an electrical propulsion unit comprising a blade, the electrical propulsion unit configured to be tiltable relative to the airframe between a wing-borne flight configuration and a thrust-borne flight configuration; and a pitch mechanism comprising a pitch actuator configured to vary a pitch of the blade; wherein the electric vertical take-off and landing aircraft is configured to limit a range within which the pitch actuator can vary the pitch of the blade to: a larger pitch range when the electrical propulsion unit is in the wing-borne flight configuration; and a smaller pitch range when the electrical propulsion unit is in the thrust-borne flight configuration.

As a result, the impact of a failure in the pitch actuator during thrust-borne flight may be reduced without significantly inhibiting the performance of the EPU during non-pitch actuator failure operation. Specifically, limiting the pitch to a smaller pitch range in thrust-borne flight may reduce the impact of a failure of the pitch actuator during thrust-borne flight because the blade pitch may be limited to an acceptable range of pitch angles for providing vertical thrust. This may not significantly inhibit the performance of the EPU during non-pitch actuator failure operation because although a relatively large range of pitch angles may be desirable to improve performance in wing-borne flight, only a relatively small range of pitch angles may be desirable to improve performance during thrust-borne flight. In examples, the smaller pitch range is smaller than the larger pitch range.

In examples, the electrical propulsion unit comprises a propeller which comprises the blade. In examples, the propeller is rotatable about a propeller rotational axis to generate thrust. In examples, a tilt angle is measured between a roll axis of the airframe and the propeller rotational axis. In examples, the tilt angle is measured in a plane which extends along the roll axis and a yaw axis of the airframe. In examples, the tilt angle has a value of between -10° and 10°, between -5° and 5°, or 0° when the electrical propulsion unit is in the wing-borne flight configuration. In examples, the tilt angle has a value of greater than 80°, greater than 85°, greater than 89°, 90°, between 70° and 110°, or between 80° and 100° when the electrical propulsion unit is in the thrust-borne flight configuration.

Optionally, the pitch mechanism is configured to limit the range within which the pitch actuator can vary the pitch of the blade to: the larger pitch range when the electrical propulsion unit is in the wing-borne flight configuration; and the smaller pitch range when the electrical propulsion unit is in the thrust-borne flight configuration. Using the pitch mechanism to perform multiple functions may provide a sufficiently compact solution to be packaged within the space constraints of the EPU.

Optionally, the electric vertical take-off and landing aircraft comprises a tilt actuator configured to vary a tilt angle of the electrical propulsion unit relative to the airframe to tilt the electrical propulsion unit relative to the airframe between a wing-borne flight configuration and a thrust-borne flight configuration Optionally, the pitch actuator is a separate actuator to the tilt actuator such that the pitch actuator can vary the pitch of the blade separately to the tilt actuator varying the tilt angle of the electrical propulsion unit.

Thereby, the performance of the aircraft may be improved compared with if a single actuator varied both the pitch of the blade and the tilt angle, and the pitch of the blade was thereby in a fixed relationship to the tilt angle of the electrical propulsion unit (EPU). For example, during wing-borne flight when the tilt angle may be kept constant, the pitch actuator could vary the pitch of the blade depending on the airspeed (which may vary during wing-borne flight) to optimise the pitch of the blade for the given airspeed. This may improve the power consumption of the EPU and reduce the noise of the EPU. In comparison, if the pitch of the blade were in a fixed relationship to the tilt angle, during wing-borne flight, a single, sub-optimum, pitch of the blade may be used instead.

Additionally, by having a separate tilt actuator and pitch actuator, the safety of the aircraft may be improved. Specifically, a failure mode in which a jamming of the pitch mechanism causes the tilt actuator to be unable to tilt the EPU to the thrust-borne flight configuration may be removed, which may otherwise be present if a single actuator were used to vary the pitch of the blade and the tilt angle of the EPU.

Optionally, the electric vertical take-off and landing aircraft comprises a controller configured to control the pitch actuator to vary the pitch of the blade based on an airspeed of the electric vertical take-off and landing aircraft.

Optionally, the electric vertical take-off and landing aircraft is configured to mechanically limit the range within which the pitch actuator can vary the pitch of the blade to: the larger pitch range when the electrical propulsion unit is in the wing-borne flight configuration; and the smaller pitch range when the electrical propulsion unit is in the thrust-borne flight configuration. Mechanically limiting (in comparison to, for example, electronically limiting) the range may provide a more robust means for limiting the range.

Optionally, the pitch mechanism is configured to mechanically limit the range within which the pitch actuator can vary the pitch of the blade to: the larger pitch range when the electrical propulsion unit is in the wing-borne flight configuration; and the smaller pitch range when the electrical propulsion unit is in the thrust-borne flight configuration.

Optionally, the electric vertical take-off and landing aircraft is configured such that tilting the electrical propulsion unit relative to the airframe from the wing-borne flight configuration to the thrust-borne flight configuration causes the pitch of the blade to change from being within the larger pitch range to being within the smaller pitch range. As a result, the safety of the aircraft may be improved because the effect of a failure of the pitch mechanism in wing-borne flight on the operation of the aircraft in thrust-borne flight may be reduced. Specifically, the pitch mechanism has a relatively large effect on the pitch of the blade in wing-borne flight, but a relatively small effect on the pitch of the blade when in thrust-borne flight. Thereby, if the pitch mechanism fails (e.g., the actuator fails) such that the pitch of the blade varies uncontrollably within the larger range during wing-borne flight, when the aircraft transitions to thrust-borne flight, the pitch of the blade will be returned to the known, smaller, range such that the EPU can still be used during landing.

Additionally, the benefits of varying the pitch of blade within a larger pitch range during wing-borne flight may be achieved without requiring as high an integrity actuator, which may enable a lighter and less complex pitch actuator to be employed.

Optionally, the pitch mechanism is configured such that tilting the electrical propulsion unit relative to the airframe from the wing-borne flight configuration to the thrust-borne flight configuration causes the pitch of the blade to change from being within the larger pitch range to being within the smaller pitch range.

Optionally, the electrical propulsion unit comprises a hub; and the blade is rotatably coupled to the hub. Optionally, the blade comprises a pitch coupling, which is movable along a pitch input path to rotate the blade relative to the hub in order to vary a pitch of the blade; the pitch mechanism comprises a linkage comprising a first end coupled to the pitch actuator and a second end coupled to the pitch coupling; and the pitch actuator is configured to impart a first range of motion, along an actuator output path, to the first end of the linkage and, via the linkage, a second range of motion, along the pitch input path, to the pitch coupling in order to vary the pitch of the blade; and the pitch mechanism is configured, for a given first range of motion along the actuator output path, to impart a relatively greater second range of motion to the pitch coupling along the pitch input path when the electrical propulsion unit is in the wing-borne flight configuration and a relatively smaller second range of motion to the pitch coupling along the pitch input path when the electrical propulsion unit is in the thrust-borne flight configuration.

As a result, the impact of a failure in the pitch actuator during thrust-borne flight may be reduced without significantly inhibiting the performance of the EPU during non-pitch actuator failure operation. Specifically, if a failure in the pitch actuator occurs, the impact of undesirable oscillations on the pitch of the blade may be reduced relative to if the second ranges were equal. This may not significantly inhibit the performance of the EPU during non-pitch actuator failure operation because although relatively large changes of pitch angle may be desirable to improve performance in wing-borne flight, only relatively small changes of pitch angle may be desirable to improve performance during thrust-borne flight. In examples, the relatively greater second range of motion is greater than the relatively smaller second range of motion.

Optionally, the given first range of motion is a maximum range of motion for the first end of the linkage; and the maximum range of motion imparts a relatively greater maximum second range of motion to the pitch coupling along the pitch input path when the electrical propulsion unit is in the wing-borne flight configuration and a relatively smaller maximum second range of motion to the pitch coupling along the pitch input path when the electrical propulsion unit is in the thrust-borne flight configuration. This may provide a simple, and thereby robust, means for mechanically limiting the different ranges in thrust-borne and wing-borne flight. In examples, the relatively greater maximum second range of motion is greater than the relatively smaller maximum second range of motion.

Optionally, the pitch actuator is attached to the airframe such that a position of the actuator is fixed relative to the airframe. Attaching the pitch actuator to the airframe, rather than, for example, having the pitch actuator be part of the EPU and thereby move relative to the airframe as the EPU is tilted by the tilt actuator, may reduce the weight of the EPU and thereby reduce the loads on the tilt actuator. This may reduce the likelihood of the tilt actuator failing and thereby may improve the safety of the aircraft.

The airframe comprises a yaw axis and a roll axis; and, optionally, the actuator output path comprises a smaller component parallel to the yaw axis and a larger component parallel to the roll axis, such that: when the electrical propulsion unit is in the wing-borne flight configuration, the larger component is parallel to the pitch input path; and when the electrical propulsion unit is in the thrust-borne flight configuration, the smaller component is parallel to the pitch input path. This may provide a mechanically simple, and thereby potentially robust, way to achieve the desired translation between the actuator output path and the pitch input path. In examples, the smaller component is smaller than the larger component.

Optionally, the smaller component is no greater than 25% of the larger component. As a result, the pitch actuator may have a smaller effect on the pitch of the blade in thrust-borne flight than if the smaller component were greater than 25%, which may further improve the performance of the aircraft during thrust-borne flight in the event of the pitch actuator failing. Optionally, the smaller component is no greater than 20%, 15%, 10%, 5%, or 1% of the larger component.

Optionally, the pitch mechanism comprises a guide link comprising: a first end connected to the airframe; and a second end connected to the first end of the linkage; and the guide link is configured to guide the first end of the linkage along the actuator output path. A guide link may require less supporting structure to implement, and thereby be lighter and simpler, than other mechanisms for guiding the output coupling along the actuator output path, such as a guide slot in which the output coupling is constrained to move.

Optionally, the linkage comprises a pitch rod and a link; the pitch rod comprises the second end coupled to the pitch coupling; the link comprises the first end coupled to the pitch actuator; the pitch rod is connected to the link at a pivot; and when the electrical propulsion unit is in the thrust-borne flight configuration, the first end of the guide link is aligned along the yaw axis with the pivot. As a result, when the EPU is in the thrust-borne flight configuration, movement of the output coupling of the pitch actuator along the actuator output path may have negligible or zero impact on the position of the input coupling along the pitch input path. Thereby, the difference between the maximum and the minimum value of the smaller pitch range may be very small, which may further reduce the impact of a pitch actuator failure on the pitch of the blade in thrust-borne flight.

Optionally, a maximum value of the smaller pitch range is less than a maximum value of the larger pitch range. As a result, the pitch of the blade may be better optimised for each phase of flight. Specifically, wing-borne flight and thrust-borne flight have different requirements for the pitch of the blade to one another. To generate sufficient thrust during thrust-borne flight within the torque limits of an EPU's motor, a low pitch of the blade may be used. In wing-borne flight, a higher pitch of the blade may be used to reduce the rotational speed of the motor and thereby reduce noise and improve efficiency.

Optionally, a maximum value of the smaller pitch range is less than a minimum value of the larger pitch range. As a result, the pitch of the blade is biased towards higher pitches when in wing-borne flight than in thrust-borne flight. Thereby, in the event of the pitch actuator failing, the pitch of the blade may still increase as the EPU tilts from the thrust-borne flight configuration to the wing-borne flight configuration. Optionally, the difference between the maximum value of the smaller pitch range and the minimum value of the larger pitch range is no less than 5°.

Optionally, the pitch mechanism is configured such that a minimum clearance between the actuator output path and the electrical propulsion unit is greater when the electrical propulsion unit is in the thrust-borne flight configuration than when the electrical propulsion unit is in the wing-borne flight configuration. This may provide a mechanically simple, and thereby light and robust, means for achieving the maximum value of the smaller pitch range being less than the maximum value of the larger pitch range and/or the maximum value of the smaller pitch range being less than the minimum value of the larger pitch range.

Optionally, a difference between a maximum value of the smaller pitch range and a minimum value of the smaller pitch range is no greater than 10°. A smaller pitch range may reduce the range of pitches that the blade can be at in the event of a pitch actuator failure, and thereby the likelihood of the pitch of the blade being unacceptable for thrust-borne flight. Optionally, the difference between the maximum value of the smaller pitch range and the minimum value of the smaller pitch range is no greater than 8°, 5°, 2°, or 1° or substantially 0°.

Optionally, the smaller pitch range has a maximum value of no greater than 25°. As a result, for a given maximum thrust requirement during thrust-borne flight, the maximum torque (which is proportional to the pitch of the blade) required from an EPU's motor may be lower, and thereby the weight of the motor may be reduced. In contrast, if the maximum value were greater, the failure of the actuator could result in the pitch of the blade being greater in the thrust-borne flight configuration, which may require greater torque from the motor, for a given maximum thrust requirement, and thereby a heavier motor. Optionally, the maximum value of the smaller pitch range is no greater 21°.

Optionally, a difference between a maximum value of the larger pitch range and a minimum value of the larger pitch range is no less than 20°. A larger difference may enable the pitch of the blade to be varied by a greater extent during wing-borne flight and thereby may improve the efficiency and reduce the noise of the EPU to a greater extent than if a smaller difference were used. Optionally, the difference between the maximum value of the larger pitch range and the minimum value of the larger pitch range is no less than 30°, 40°, 50°, or 60°.

Optionally, a maximum value of the larger pitch range is no less than 85°. This may enable the blade to be feathered to reduce the drag of the blade. This may be desirable in situation such as the failure of the EPU. Optionally, the maximum value of the larger pitch range is no less than 89°.

Optionally, the electrical propulsion unit comprises a plurality of blades; each blade of the plurality of blades comprises a respective pitch coupling, which is moveable along a respective pitch input path of the electrical propulsion unit to rotate a respective blade of the plurality of blades relative to the hub in order to vary a pitch of the respective blade of the plurality of blades; and the second end of the linkage is coupled to each respective pitch coupling. This may provide a mass efficient means of varying the pitch of multiple blades, which may reduce the mass and the number of failure points of the aircraft when compared with having a respective linkage for each blade.

Optionally, the pitch mechanism is configured such that tilting the electrical propulsion unit relative to the airframe from the wing-borne flight configuration to the thrust-borne flight configuration causes the pitch of the blade to reduce. As a result, the eVTOL aircraft may be able to tolerate a failure of the pitch actuator during wing-borne flight as the blade pitch may be reduced to a lower pitch which may be usable in thrust-borne flight, e.g., for landing.

In contrast, if the pitch mechanism were not so configured, a failure of the pitch actuator during wing-borne flight may result in the blade pitch being stuck at too high an angle to be effectively used during thrust-borne flight.
According to a second aspect, the present invention provides an electric vertical take-off and landing aircraft comprising: an airframe; an electrical propulsion unit comprising a hub and a blade, the blade rotatably coupled to the hub and comprising a pitch coupling, which is movable along a pitch input path to rotate the blade relative to the hub in order to vary a pitch of the blade, the electrical propulsion unit configured to be tiltable relative to the airframe between a wing-borne flight configuration and a thrust-borne flight configuration; and a pitch mechanism comprising a pitch actuator and a linkage comprising a first end coupled to the pitch actuator and a second end coupled to the pitch coupling, the pitch actuator configured to impart a first range of motion, along an actuator output path, to the first end of the linkage and, via the linkage, a second range of motion, along the pitch input path, to the pitch coupling in order to vary the pitch of the blade, wherein: the pitch mechanism is configured, for a given first range of motion along the actuator output path, to impart a relatively greater second range of motion to the pitch coupling along the pitch input path when the electrical propulsion unit is in the wing-borne flight configuration and a relatively smaller second range of motion to the pitch coupling along the pitch input path when the electrical propulsion unit is in the thrust-borne flight configuration.

According to a third aspect, an airframe; an electrical propulsion unit comprising a blade; the electrical propulsion unit configured to be tiltable relative to the airframe between a wing-borne flight configuration and a thrust-borne flight configuration; and a pitch mechanism comprising a pitch actuator configured to vary a pitch of the blade; wherein the pitch mechanism is configured such that tilting the electrical propulsion unit relative to the airframe from the wing-borne flight configuration to the thrust-borne flight configuration causes the pitch of the blade to reduce..

According to a fourth aspect, the present invention provides an electric vertical take-off and landing aircraft comprising: an airframe comprising a yaw axis and a roll axis; an electrical propulsion unit comprising a blade and a pitch coupling comprising an input coupling that is movable along a pitch input path of the electrical propulsion unit to vary a pitch of the blade; a tilt actuator configured to vary a tilt angle of the electrical propulsion unit relative to the airframe to tilt the electrical propulsion unit relative to the airframe between a wing-borne flight configuration and a thrust-borne flight configuration; and a pitch mechanism comprising: a pitch actuator comprising an output coupling movable along an actuator output path; and a linkage comprising a first end and a second end, the first end coupled to the input coupling of the pitch coupling and the second end coupled to the output coupling of the pitch actuator, wherein the actuator output path comprises a smaller component parallel to the yaw axis and a larger component parallel to the roll axis, such that: when the electrical propulsion unit is in the wing-borne flight configuration, the larger component is parallel to the pitch input path; and when the electrical propulsion unit is in the thrust-borne flight configuration, the smaller component is parallel to the pitch input path.

According to a fifth aspect, the present invention provides an electric vertical take-off and landing aircraft comprising: an airframe; an electrical propulsion unit comprising a blade; a tilt actuator configured to vary a tilt angle of the electrical propulsion unit relative to the airframe to tilt the electrical propulsion unit relative to the airframe between a wing-borne flight configuration and a thrust-borne flight configuration; and a pitch mechanism comprising a pitch actuator configured to vary a pitch of the blade; wherein the pitch actuator is a separate actuator to the tilt actuator such that the pitch actuator can vary the pitch of the blade separately to the tilt actuator varying the tilt angle of the electrical propulsion unit.

Optional features of aspects may be equally applied to other aspects, where appropriate.

### BRIEF DESCRIPTION OF THE DRAWINGS

Figure 1 is a perspective view of an example eVTOL aircraft;
Figure 2 is a schematic side view of a forward Electrical Propulsion Unit (EPU) and pitch mechanism of the example eVTOL aircraft;
Figure 3 is a schematic side view of a blade and a pitch coupling of the forward EPU;
Figure 4 is a schematic side view of a pitch mechanism of the example eVTOL aircraft;
Figure 5 is a side view of the example eVTOL aircraft with the forward EPU in a thrust-borne flight configuration;
Figure 6 is a side view of the example eVTOL aircraft with the forward EPU in a wing-borne flight configuration;
Figure 7 is a table showing different operational states of the pitch mechanism;
Figure 8 is a schematic side view of an alternative pitch mechanism of the example eVTOL aircraft; and
Figure 9 is a graph showing variations in a pitch of the blade during a flight of the example eVTOL aircraft.

### DETAILED DESCRIPTION

eVTOL aircraft according to examples herein operate in wing-borne (forwards) and thrust-borne (vertical) flight operating modes. Tilt mechanisms are used to tilt propellers of the eVTOL aircraft between their wing-borne flight configurations and their thrust-borne flight configurations. Significantly greater thrust is required in thrust-borne flight operating modes during vertical take-off and landing manoeuvres than is required during wing-borne flight operating modes. Increased thrust can be achieved by increasing blade pitch and/or by increasing propeller rotation speeds. To generate the required thrust in thrust-borne flight, a low rotational speed and a high blade pitch could be used. However, as torque increases with increase blade pitch, this could require a high torque, which could be outside the torque capabilities of a motor driving the propeller. Therefore, in thrust-borne flight, a low blade pitch and a high rotational speed may be used. When the eVTOL aircraft transitions to wing-born flight, if the blades were left at their low blade angle, the propeller could not have enough "bite" on the air to generate the required thrust efficiently and could therefore need to be operated at higher speeds, which could be inefficient and/or noisy. Therefore, in wing-borne flight, the blade pitch may be increased, and the rotational speed reduced to increase the efficiency and reduce the noise of the eVTOL aircraft. During thrust-borne flight, only a limited range of blade pitches may be used, whilst in wing-borne flight, a wide range of blade pitches may be used to provide efficient operation as the speed of the aircraft varies. Examples herein provide a pitch mechanism that enables blade pitch variation while in wing-borne flight.

Incorporating a pitch mechanism may introduce additional failure modes to the eVTOL aircraft. For example, the pitch mechanism could fail (e.g., an actuator could fail) such that the blade pitch varies uncontrollably, which could make the propeller unusable. This could be most significant during landing when greater thrust than in wing-borne flight is required. One way to mitigate this could be to increase the integrity of the pitch mechanism, which may drive additional weight into the pitch mechanism. Examples herein provide a pitch mechanism which mechanically limits a range within which the pitch actuator can vary the pitch of the blade to a larger pitch range when the electrical propulsion unit is in the wing-borne flight configuration and a smaller pitch range when the electrical propulsion unit is in the thrust-borne flight configuration, and returns the blade pitch to the known, smaller, range when moving from wing-borne to thrust-borne operation. Thereby, the eVTOL aircraft may be able to tolerate the failure of a pitch mechanism. This may enable the benefits of varying the blade pitch during wing-borne flight to be realised whilst also using a lower integrity (and thereby lower weight) pitch mechanism.

Additionally, if the pitch mechanism were to fail, for example jam, during wing-borne flight, the blade pitch may be stuck at too high an angle to be effectively used during thrust-borne flight, such as during a landing. One way to mitigate this could be to increase the integrity of the pitch mechanism. Examples herein provide a pitch mechanism which provides a reduction in blade pitch, when moving from wing-borne to thrust-borne operation, even after a failure of a pitch mechanism. Thereby, the eVTOL aircraft may be able to tolerate the failure of a pitch mechanism as the blade pitch may be returned to a usable, lower pitch to perform a landing. This may enable the benefits of varying the blade pitch during wing-borne flight to be realised whilst also using a lower integrity (and thereby lower weight) pitch mechanism.

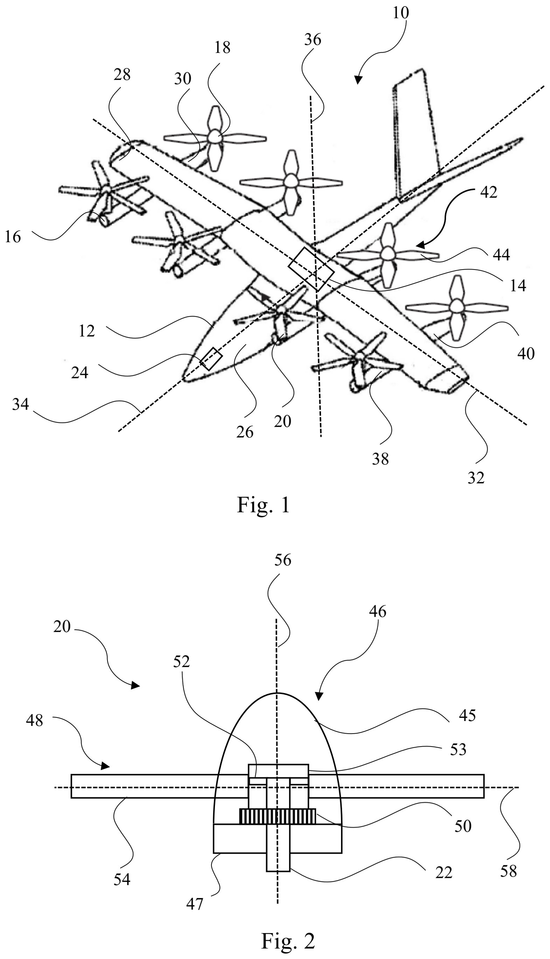

Figure 1 shows an eVTOL aircraft 10. The eVTOL aircraft 10 has an airframe 12, batteries 14, four tilt actuators 16, four rear electrical propulsion units (EPUs) 18, four forward EPUs 20, four pitch mechanisms 22 (shown in Figure 2) and a controller 24.

The airframe 12 has a fuselage 26, wings 28 extending from each side of the fuselage 26, and four pylons 30. Additionally, the airframe 12 has a pitch axis 32, a roll axis 34 and a yaw axis 36. The wings 28 are fixed to an upper side of the fuselage 26 approximately midway along the fuselage 26 and extend perpendicularly relative to the fuselage 26. The pylons 30 are fixed to undersides of the wings 28 and spaced apart from one another along the wings 28. A fore pylon portion 38 of each pylon 40 projects forward of the wings 28, and an aft pylon portion 40 of each pylon 30 projects aft of the wings 28.

The batteries 14 are located in the fuselage 26 and provide power via various respective electrical connectors and couplings to the forward EPUs 20, the rear EPUs 18, the tilt actuators 16, and the controller 24.

Each of the four rear EPUs 18 are identical, so only one will be described for brevity. The rear EPU 18 is fixed to one of the aft pylon portions 40 and has a propeller 42 which is driven by a motor (not shown) to generate thrust. In this example, the propeller 42 has four blades 44.

The four forward EPUs 20 are identical, so only one will be described for the sake of brevity. The forward EPU 20 (shown in more detail in Figure 2) has a housing 46, a propeller 48, a motor 50, and a pitch coupling 52. The forward EPU 20 is connected to a fore pylon portion 38. The housing 46 houses the other components of the forward EPU 20 and has a dome portion 45 and base portion 47. The propeller 48 has a hub 53 and five blades 54. The hub 53 connects the five blades 54 to the motor 50. Each blade 54 has a blade root 49, which is rotatably connected to the hub 53, and an aerofoil 51, to which the blade root 49 is connected. The motor 50 drives the propeller 48 to cause the propeller 48 to rotate about a propeller rotational axis 56 in a rotational plane 58 of the propeller 48 to generate thrust.

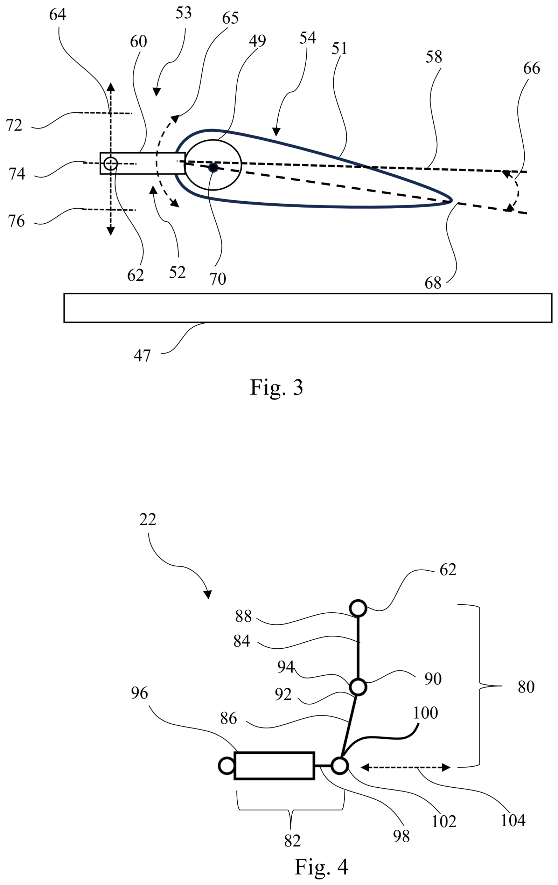

The pitch coupling 52 has five sets 53 of pitch horns 60 and input couplings 62, one for each blade 54 of the propeller 48 of the forward EPU 20. Figure 3 shows a single set 53 with its associated blade 54. The pitch coupling 52 may also be referred to as a pitch arrangement. Each set 53 is identical, so only one set will be described for brevity. The input coupling 62 couples the blades 54 to a respective pitch mechanism 22 of the four pitch mechanisms 22 via the pitch horn 60, which is connected to the blade root 49. In this example, the input coupling 62 is a bolt which is inserted into a hole in the pitch horn 60. The input coupling 62 is moveable by the pitch mechanism 22 along a pitch input path 64 of the forward EPU 20 to vary a pitch 66 of the blade 54. The pitch 66 of the blade 54 (which may be referred to as a blade pitch angle) is an angle 66 measured between a chord line 68 of the aerofoil 51 of the blade 54 and the rotational plane 58 of the propeller 48.

Figure 3 shows a simplified example in which the pitch input path 64 is linear. Figure 3 shows a side cross sectional view of the blade 54, pitch horn 60, input coupling 62, and the base portion 47 of the housing 46 of the forward EPU 20, which the input coupling 62 is moved relative to. In practice, the pitch input path 64 may have other, non-linear forms. The input coupling 62 is moveable along the pitch input path 64 towards and away from the base portion 47 of the housing 46 of the forward EPU 20. Movement of the input coupling 62 along the pitch input path 64 generates a moment about a pitch axis 70 of the blade 54 via the pitch horn 60, which causes the blade 54 to rotate (shown by the curved arrow 65 in figure 3) about the pitch axis 70 of the blade 54 relative to the hub 54. This movement varies the pitch 66 of the blade 54. In this example, the pitch axis 70 of the blade 54 is perpendicular to the propeller rotational axis 56. The pitch 66 of the blade 54 is dictated by the position of the input coupling 62 along the pitch input path 64, and thereby the distance of the input coupling 62 from the base portion 47. For example, in Figure 3, if the input coupling 62 were moved away from the base portion 47, into a position 72 above a reference position 74 shown in Figure 3, the pitch 66 of the blade 54 would increase. Conversely, if the input coupling 62 were moved towards the base portion 47 into a position 76 below the reference position 74 shown in Figure 3, the pitch 66 of the blade 54 would decrease.

The four pitch mechanisms 22 are identical, so only one will be described for brevity. The pitch mechanism 22 (shown in the thrust-borne flight configuration in Figure 4) has a linkage 80 and pitch actuator 82. The linkage 80 has a pitch rod 84 and a link 86. A first end 88 of the pitch rod 84 (which may be referred to as the first end of the linkage 80) is coupled to one of the pitch horns 60 via one of the input couplings 62. Specifically, the first end 88 of the pitch rod 84 has a hole in which is located the bolt of the input coupling 62. A second end 90 of the pitch rod 84 is coupled to a first end 92 of the link 86 at a pivot 94.

The pitch actuator 82 has a main body 96 and an actuator rod 98. The pitch actuator 82 is a separate actuator to the tilt actuators 16. The main body 96 is attached (directly) to the airframe 12 (specifically, to the fore pylon portion 38) so that the position and orientation of the main body 96 is fixed relative to the airframe 12 and does not change as the tilt actuator 16 varies the tilt angle 106. Thereby, the position and orientation of the actuator output path 104 (discussed below) is also fixed relative to the airframe 12 and does not change as the tilt actuator 16 varies the tilt angle 106. In some examples, the position of only a part of the main body 96 may be fixed relative to the airframe 12 such that the position of other parts of the main body 96 relative to the airframe 12 can vary and thereby the orientation of the main body 96 relative to the airframe 12 can vary.

The actuator rod 98 is coupled to a second end 100 of the link 86 (which may be referred to as the second end of the linkage 80) by an output coupling 102. In this example, the output coupling 102 is a bolt which extends through a hole in each of the actuator rod 98 and the link 86. Extending and retracting the actuator rod 98 moves the output coupling 102 along an actuator output path 104. In this example, the actuator output path 104 is linear. However, a further example will be described below in which the actuator output path 104 is non-linear.

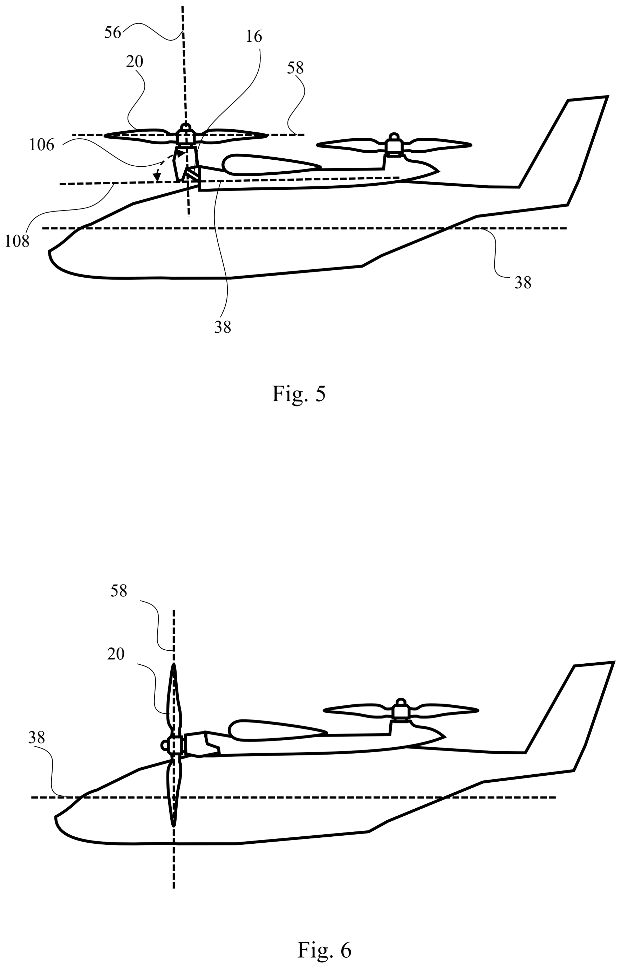

Each of the tilt actuators 16 is identical, so only one will be described for brevity. Referring now to Figure 5, the tilt actuator 16 is fixed to a fore pylon portion 38 and is connected to one of the forward EPUs 20. The tilt actuator 16 varies a tilt angle 106 of the forward EPU 20 to tilt the forward EPU 20 relative to the airframe 12 between a thrust-borne flight configuration (shown in Figure 5) and a wing-borne flight configuration (shown in Figure 6). The tilt angle 106 is measured between the propeller rotational axis 56 and an axis 108 which is parallel to the roll axis 34 of the airframe 12. In this example, the tilt actuator 16 tilts the forward EPU 20 through 90° relative to the airframe 12 between the thrust-borne flight configuration and the wing-borne flight configuration. In the thrust-born configuration, the tilt angle 106 is 90°, and the rotational plane 58 of a propeller 48 of the forward EPU 20 is parallel to the roll axis 34 of the airframe 12. In the wing-borne flight configuration, the tilt-angle is 0°, and the rotational plane 58 of the propeller 48 of the forward EPU 20 is perpendicular to the roll axis 34 of the airframe 12. In the wing-borne flight configuration, the pitch input path 64 is parallel to the roll axis 34. In the thrust-borne flight configuration, the pitch input path 64 is parallel to the yaw axis 36. The tilt angle 106 having other values in the thrust-borne flight configuration and the wing-borne flight configuration is also envisaged.

The controller 24 is located within the airframe 12 and controls the tilt actuators 16 and the pitch actuators 82.

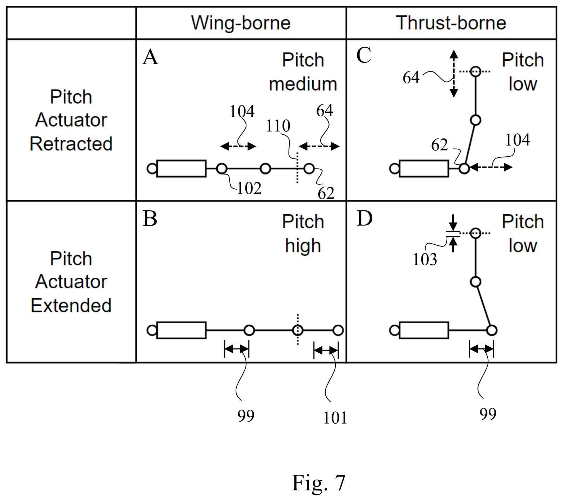

The operation of a single pitch mechanism 22 in relation to a single blade 54 will now be described. It will be appreciated that the other pitch mechanisms 22 and blades 54 operate in a corresponding manner. Referring now to Figure 7, during wing-borne flight, the actuator output path 104 and the pitch input path 64 are aligned, as shown in pane A of Figure 7 (the paths 104, 64 have been offset upwards from their actual positions in Figure 7 for clarity). Conversely, during thrust-borne flight, the actuator output path 104 and the pitch input path 64 are perpendicular to one another, as shown in pane C of Figure 7 (the pitch input path 64 has been offset to the left in pane C of Figure 7 for clarity). This difference results in the pitch mechanism 22 mechanically limiting (i.e., placing a mechanical limit on) the range within which the pitch actuator 82 can vary the pitch 66 of the blade 54 to different ranges when in the different flight configurations by translating a maximum range of movement 99 of the output coupling 102, dictated by the fully retracted and fully extended positions of the actuator rod 98, into different sizes of movement of the input coupling 62 along the pitch input path 64 as will be explained in more detail below.

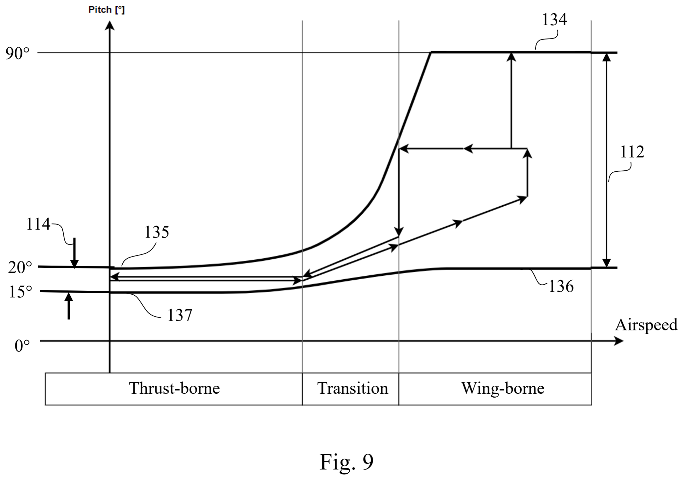

When the forward EPU 20 is in the wing-borne flight configuration, a range of movement 99 (also referred to as a range of motion) of the output coupling 102 along the actuator output path 104 translates into a relatively large movement 101 of the input coupling 62 along the pitch input path 64. The range of movement 99 can be seen in the difference in the location of the output coupling 102 between pane A (with the actuator rod 98 fully retracted) and pane B (with the actuator rod 98 fully extended) of Figure 7. The relatively large movement 101 can be seen by the difference in positions of the input coupling 62 relative to a reference 110 in pane A and pane B of Figure 7. This relatively large movement 101 enables the pitch actuator 82 to vary the pitch 66 of the blade 54 within a larger pitch range 112 (discussed below in more detail and shown in Figure 9).

The behaviour of the forward EPU 20 when it is in the thrust-borne flight configuration is shown in Figure 7, pane C and pane D. The difference in the location of the input coupling 62 between pane C (with the actuator rod 98 fully retracted) and pane D (with the actuator rod 98 fully extended) of Figure 7 represents the same, given, range of movement 99 of the output coupling 102 along the actuator output path 104 to the range of movement 99 of the output coupling 102 along the actuator output path 104 conducted when the forward EPU 20 was in the wing-borne flight configuration. When in the thrust-borne flight configuration, this given range of movement 99 translates into a relatively small, or no, movement 103 of the input coupling 62 along the pitch input path 64. This is shown by the input coupling 62 being in substantially the same position relative to the reference 110 in pane C and D of Figure 7. The relatively small movement 103 has been shown in pane D of Figure 7 and exaggerated in size for clarity. In some examples, the relatively small movement 103 may have no magnitude at all. This relatively small movement 103 means the pitch actuator 82 can only vary the pitch 66 of the blade 54 within a smaller pitch range 114 (discussed below in more detail and shown in Figure 9). The relatively small movement 103 is small relative to the relatively large movement 101. The smaller pitch range 114 is smaller than the larger pitch range 112 (discussed below in more detail and shown in Figure 9).

The different behaviour of the pitch mechanism 22 in thrust-borne flight and in wing-borne flight may mean that if the pitch mechanism 22 fails in wing-borne flight, the movement of the forward EPU 20 from its wing-borne flight configuration to its thrust-borne flight configuration forces the pitch 66 of the blade 54 to return to the smaller, known, range 114. This can be seen in Figure 7, which shows that irrespective of whether the pitch actuator is retracted (Figure 7 pane A) or extended (Figure 7 Pane B) in wing-borne flight, the transition from wing-borne flight to thrust-borne flight causes the input coupling 62 to return to same, reference 110, position (Figure 7 pane C and Figure 7 pane D). Additionally, Figure 7 also shows that the input coupling 62 is retracted further when in the thrust-borne flight configuration than when in the wing-borne flight configuration, which corresponds to a lower pitch 66 of the blade 54. As a result, moving from the wing-borne flight configuration to the thrust-borne flight configuration causes the pitch 66 of the blade 54 to reduce, even if the pitch mechanism 22 were to fail.

As mentioned previously, the pitch actuator 82 is a separate actuator to the tilt actuators 16. This enables the pitch actuator 82 to vary the pitch 66 of the blade 54 separately to the tilt actuator 16 varying the tilt angle 106. This is shown in pane A and pane B of Figure 7, in which the tilt angle 106 remains constant, but the position of the input coupling 62 along the pitch input path 64, and thereby the pitch of the blade 54, is varied.

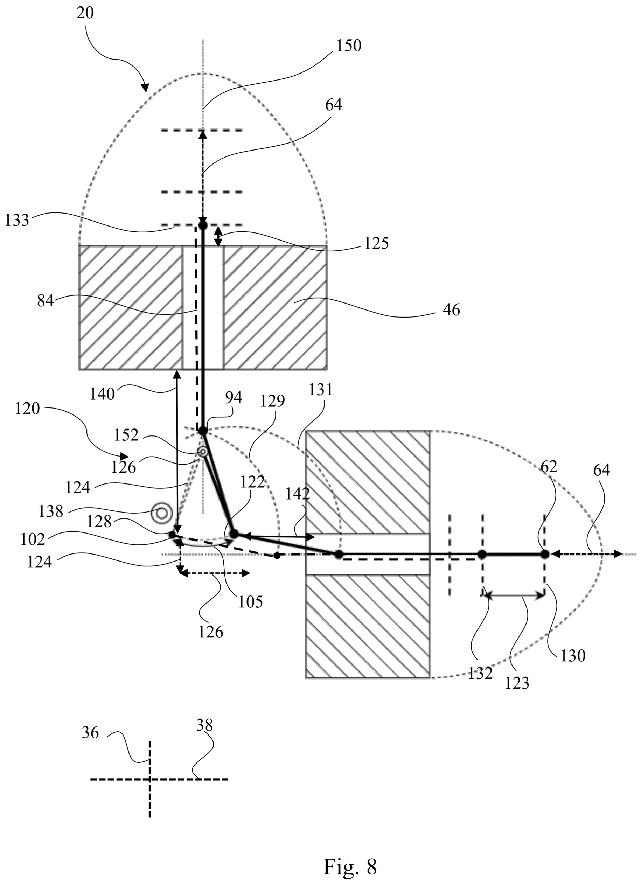

The actuator output path 104 may not be linear. Figure 8 shows an alternative pitch mechanism 120, which is identical to pitch mechanism 22 described previously, except that the actuator output path 122 is curved rather than linear, and the actuator rod 98 has the capability to move parallel to the yaw axis 36 relative to the main body 96 of the pitch actuator 82. Figure 8 shows a superimposed view of the forward EPU 20 in the thrust-borne flight configuration and the wing-borne flight configuration. Figure 8 also shows a superimposed view of the movement (denoted by curved arrow 105) of the output coupling 102 between an extended position (rightmost position in Figure 8) and a retracted position (leftmost position in Figure 8) along the curved output path 122 and the associated position of the other components of the alternative pitch mechanism 120. The extended and the retracted positions correspond to the actuator rod 98 being extended (which is shown by the components of the alternative pitch mechanism 120 being represented by solid lines in Figure 8) and retracted (which is shown by the components of the alternative pitch mechanism 120 being represented by dashed lines in Figure 8). Where the position of the components of the alternative pitch mechanism 120 overlap, the components in the retracted position have been offset from their actual positions for clarity.

The shape of the curved actuator output path 122 is dictated by a guide link 124 of the pitch mechanism 22. The guide link 124 has a first end 126 fixed to the airframe 12 and a second end 128 connected to the output coupling 102 and guides the output coupling 102 along the curved actuator output path 122.

The shape of the curved actuator output path 122 results in the alternative pitch mechanism 120 behaving differently in thrust-borne flight and wing-borne flight in a corresponding manner to that described with reference to Figure 7. Specifically, the curved actuator output path 122 has a smaller component 124 (the arrow denoting which has been exaggerated in size in Figure 8 for clarity) parallel to the yaw axis 36 of the airframe 12 and a larger component 126 parallel to the roll axis 38. Thereby, when the forward EPU 20 is in the wing-borne flight configuration, the larger component 126 of the curved actuator output path 122 is parallel to the pitch input path 64 (the location of which has been offset from its actual position in Figure 8 to aid clarity). This enables the range of movement of the output coupling 102 along the curved actuator output path 122 (which, in Figure 8, is the movement between the two positions of the output coupling 102 shown by the curved arrow 105) to translate into a relatively large movement 123 of the input coupling 62 along the pitch input path 64. Accordingly, movement of the output coupling 102 between the extended position and the retracted position results in the input coupling 62 moving between a high pitch position 130 and a medium pitch position 132, which dictate a maximum value 134 and a minimum value 136 of the larger pitch range 112 of pitch 66 of the blade 54 discussed below with reference to Figure 9.

When the forward EPU 20 is in the thrust-borne flight configuration, the smaller component 124 of the curved actuator output path 122 is parallel to the pitch input path 64. This results in the range of movement 105 of the output coupling 102 along the curved actuator output path 122 translating into a relatively small movement 125 of the input coupling 62 along the pitch input path 64. Due to the curved shape of the curved actuator output path 122, the input coupling 62 will be in the same, low pitch position 133 when the output coupling 102 is the extended position and the retracted position. The low pitch position 133 dictates a maximum value 135 of the smaller pitch range 114 of the pitch 66 of the blade 54. A minimum value 137 of the pitch 66 of the blade 54 is dictated by the location of the lowest point of the curved actuator output path 122. In this example, the smaller component 124 is no greater than 25% of the larger 126 component. Other examples are envisaged in which the smaller component 124 is no greater than 20%, 15%, 10%, 5%, or 1% of the larger component 126.

The hashed curved lines 129, 131 in Figure 8 show how the tilting of the forward EPU 20 from the wing-borne flight configuration to the thrust-borne flight configuration forces the different locations of the pivot 94 in the wing-borne flight configuration (which result from the output coupling 102 moving between the extended position and retracted position) to converge to a single location when the forward EPU 20 is in the thrust-borne location. As a result, irrespective of whether the input coupling 62 was at the high pitch position 130 or the medium pitch position 132 in wing-borne flight, the transition of the forward EPU 20 to thrust-borne flight forces the output coupling 62 into the low pitch position 133. Thereby, a reduction in the pitch 66 of the blade 54 is provided, when moving from wing-borne to thrust-borne operation, even if the pitch mechanism 22 were to fail.

A tilt pivot point 138, about which the tilt actuator 16 tilts the forward EPU 20, is located vertically above and rearwards of the curved actuator output path 122. As a result, a minimum clearance 140,142 between the curved actuator output path 122 and the forward EPU 20 is greater when the forward EPU 20 is in the thrust-borne flight configuration than when the forward EPU 20 unit is in the wing-borne flight configuration. The clearance 140,142 in this example is specifically measured between the curved actuator output path 122 and the base portion 47 of the housing 46 of the forward EPU 20. This difference in the minimum clearance 140, 142, results in the low pitch position 133 being lower than the medium pitch position 132, which in turn causes the minimum value 136 of the larger (wing-borne) range 112 to be larger than the minimum value 137 of the smaller (thrust-borne) range 114.

The pitch rod 84 is constrained by the base portion 47 of the housing 46 of the forward EPU 20 to move along an axis 150 which is coincident with the yaw axis 36 of the airframe 12 when the forward EPU 20 is in the thrust-borne flight configuration. The first end 126 of the guide link 124 is fixed to the airframe 12 at a point 152 which is aligned along the yaw axis 36 of the airframe 12 with the pivot 94 when the forward EPU 20 is in the thrust-borne flight configuration. As a result, when the forward EPU 20 is in the thrust-borne flight configuration, movement of the output coupling 102 of the pitch actuator 82 along the curved actuator output path 122 has a relatively small impact on the position of the input coupling 62 along the pitch input path 64, which contributes to the small size of the small movement 125, as can be seen in Figure 8.

The optimum pitch 66 of the blade 54 may vary between different phases of flight (wing-borne or thrust-borne) as described previously. For example, to generate sufficient thrust during thrust-borne flight within the torque limits of a forward EPU's motor 50, a low pitch 66 of the blade 54 may be desirable. In wing-borne flight, a higher pitch 66 of the blade 54 may be used with a reduce rotational speed of the motor 50 and thereby reduce noise and improve efficiency. Additionally, the optimum pitch 66 of the blade 54 may vary with airspeed during wing-borne flight, whilst the optimum pitch during thrust-borne flight may remain relatively constant. The geometry of the pitch mechanism 22 and the pitch coupling 52 is designed accordingly to provide the desired values for the smaller (thrust-borne) range 114 and the larger (wing-borne) range 112 of pitch 66 of the blade 54. It will be apparent to those skilled in the art that multiple different geometries for the components of the pitch mechanism 22, alternative pitch mechanism 120 and pitch coupling 52 could be adopted to achieve the desired values for the smaller pitch range 114 and the larger pitch range 112.

As shown in Figure 9, in this example, the smaller (thrust-borne) range 114 of pitch 66 of the blade 54 has a maximum value 135 of 20° and a minimum value 137 of 15°. The larger (wing-borne) range 112 of pitch 66 of the blade 54 has a maximum value 134 of 90° and a minimum value 136 of 20°. Accordingly, the difference between the maximum value 134 and the minimum value 136 of the larger pitch range 112 is greater than the difference between the maximum value 135 and the minimum value 137 of the smaller pitch range 114.

The specific values for the maximum and minimum values of the smaller pitch range 114 and larger pitch range 112 will depend on the specific design of eVTOL aircraft 10. For example, the difference between the maximum value 135 and the minimum value 137 of the smaller pitch range 114 being no greater than 10°, or substantially 0° is also envisaged. The maximum value 135 of the smaller pitch range 114 being no greater than 25° is also envisaged. The difference between the maximum value 134 of the larger pitch range 112 and the minimum value 136 of the larger pitch range 112 being no less than 20° is also envisaged. The maximum value 134 of the larger pitch range 112 being no less than 85° is also envisaged.

Figure 9 shows how the controller 24 may vary the pitch 66 of the blade 54 within the smaller pitch range 114 and the larger pitch range 112 during an example flight. The arrows in Figure 9 show an example of how the controller 24 varies the pitch 66 of the blade 54 during a flight. It will be appreciated that the controller 24 can vary the pitch 66 of the blade 54 anywhere within the smaller pitch range 114 and the larger pitch range 112, not just along the boundaries of the ranges 112,114. During take-off, the forward EPU 20 is in the thrust-borne flight configuration. The pitch 66 of the blade 54 is thereby within the smaller pitch range 114. During this phase, the controller 24 controls the pitch actuator 82 to maintain the pitch 66 of the blade 54 at a constant, low, value.

The controller 24 then controls the tilt actuator 16 to commence tilting the forward EPU 20 from the thrust-borne flight configuration to the wing-borne flight configuration. During this transition, due to the geometry of the pitch mechanism 22 and the pitch coupling 52, the smaller pitch range 114 transitions into the larger pitch range 112. Additionally, the controller 24 controls the pitch actuator 82 to commence increasing the pitch 66 of the blade 54. During wing-borne flight, the controller 24 has the latitude to control the pitch actuator 82 to vary the pitch 66 of the blade 54 within the larger pitch range 112 based on the airspeed of the eVTOL aircraft 10. As the airspeed increases, as the eVTOL aircraft 10 climbs, the pitch 66 of the blade 54 may increase. As the airspeed decreases as the eVTOL aircraft 10 slows for landing, the pitch 66 of the blade 54 is decreased. During the transition as part of the landing manoeuvre, the pitch 66 of the blade 54 is further decreased until the eVTOL aircraft 10 is once again in thrust-borne flight and the pitch 66 of the blade 54 is returned to its low value.

Although shown as a single direction path in Figure 8, in practice, the speed of the airspeed may increase and decrease multiple times during a flight and thereby the controller 24 may increase and decrease the blade 54 pitch multiple times to accommodate these changes.

In the event of a failure during wing-borne flight within the forward EPU 20, the pitch 66 of the blade 54 may be increased to a value of approximately 90° to feather the blade 54 and reduce drag caused by the potentially inoperable blade 54.

In the above examples, the pitch actuator 82 is connected directly to the output coupling 102. In other examples the pitch actuator 82 may be connected indirectly to the output coupling 102. For example, the pitch actuator 82 could be a rotary actuator connected to the input actuator by another linkage 80.

In the example of Figure 8, the actuator rod 98 has the capability to move parallel to the yaw axis 36 relative to the main body 96 of the pitch actuator 82. In other examples, the main body 96 of the pitch actuator 82 may be rotatably mounted to the airframe 12.

Whilst particular examples have been described, it should be understood that these are illustrative examples only and that various modifications may be made without departing from the scope of the invention as defined by the claims.

### NUMBERED CLAUSES

1. An electric vertical take-off and landing aircraft comprising:
   an airframe;
   an electrical propulsion unit comprising a blade;
   a tilt actuator configured to vary a tilt angle of the electrical propulsion unit relative to the airframe to tilt the electrical propulsion unit relative to the airframe between a wing-borne flight configuration and a thrust-borne flight configuration; and
   a pitch mechanism comprising a pitch actuator configured to vary a pitch of the blade;
   wherein the pitch actuator is a separate actuator to the tilt actuator such that the pitch actuator can vary the pitch of the blade separately to the tilt actuator varying the tilt angle of the electrical propulsion unit.
2. The electric vertical take-off and landing aircraft of clause 1, wherein the electric vertical take-off and landing aircraft comprises a controller configured to control the pitch actuator to vary the pitch of the blade based on an airspeed of the electric vertical take-off and landing aircraft.
3. The electric vertical take-off and landing aircraft of any one of the preceding clauses, wherein the pitch mechanism is configured:
   to mechanically limit a range within which the pitch actuator can vary the pitch of the blade to: a larger range when the electrical propulsion unit is in the wing-borne flight configuration; and a smaller range when the electrical propulsion unit is in the thrust-borne flight configuration; and
   such that tilting the electrical propulsion unit relative to the airframe from the wing-borne flight configuration to the thrust-borne flight configuration causes the pitch of the blade to change from being within the larger range to being within the smaller range.
4. The electric vertical take-off and landing aircraft of any one of the preceding clauses, wherein:
   the electrical propulsion unit comprises a pitch arrangement comprising an input coupling that is movable along a pitch input path of the electrical propulsion unit to vary the pitch of the blade;
   the pitch actuator comprises an output coupling movable along an actuator output path;
   the pitch mechanism comprises a linkage comprising a first end and a second end, the first end coupled to the input coupling of the pitch arrangement and the second end coupled to the output coupling of the pitch actuator; and
   the pitch mechanism is configured such that a similar range of movement of the output coupling along the actuator output path translates:
      when the electrical propulsion unit is in the wing-borne flight configuration, to a relatively large movement of the input coupling along the pitch input path such that the pitch actuator can vary the pitch of the blade within the larger range; and
      when the electrical propulsion unit is in the thrust-borne flight configuration, to a relatively small movement of the input coupling along the pitch input path such that the pitch actuator can vary the pitch of the blade within the smaller range.
5. The electric vertical take-off and landing aircraft of clause 4, wherein the pitch actuator is attached to the airframe such that a position of the actuator is fixed relative to the airframe.
6. The electric vertical take-off and landing aircraft of clause 4 or clause 5, wherein:
   the airframe comprises a yaw axis and a roll axis; and
   the actuator output path comprises a smaller component parallel to the yaw axis and a larger component parallel to the roll axis, such that:
      when the electrical propulsion unit is in the wing-borne flight configuration, the larger component is parallel to the pitch input path; and
      when the electrical propulsion unit is in thrust-borne flight configuration, the smaller component is parallel to the pitch input path.
7. The electric vertical take-off and landing aircraft of clause 6, wherein the smaller component is no greater than 25% of the larger component.
8. The electric vertical take-off and landing aircraft of clause 6 or clause 7, wherein:
   the pitch mechanism comprises a guide link comprising:
      a first end connected to the airframe; and
      a second end connected to the output coupling of the pitch actuator; and
   the guide link is configured to guide the output coupling of the pitch actuator along the actuator output path.
9. The electric vertical take-off and landing aircraft of clause 8, wherein:
   the linkage comprises a pitch rod and a link;
   the pitch rod comprises the first end coupled to the input coupling of the pitch arrangement;
   the link comprises the second end coupled to the output coupling of the pitch actuator;
   the pitch rod is connected to the link at a pivot; and
   when the electrical propulsion unit is in the thrust-borne configuration, the first end of the guide link is aligned along the yaw axis with the pivot.
10. The electric vertical take-off and landing aircraft of any one of clauses 3 to 9, wherein a maximum value of the smaller range is less than a maximum value of the larger range.
11. The electric vertical take-off and landing aircraft of any one of clauses 3 to 10, wherein a maximum value of the smaller range is less than a minimum value of the larger range.
12. The electric vertical take-off and landing aircraft of clause 10 or clause 11, wherein the pitch mechanism is configured such that a minimum clearance between the actuator output path and the electrical propulsion unit is greater when the electrical propulsion unit is in the thrust-borne configuration than when the electrical propulsion unit is in the wing-borne flight configuration.
13. The electric vertical take-off and landing aircraft of any one of clauses 3 to 12, wherein a difference between a maximum value of the smaller range and a minimum value of the smaller range is no greater than 10°.
14. The electric vertical take-off and landing aircraft of any one of clauses 3 to 13, wherein the smaller range has a maximum value of no greater than 25°.
15. The electric vertical take-off and landing aircraft of any one of clauses 3 to 14, wherein a difference between a maximum value of the larger range and a minimum value of the larger range is no less than 20°.
16. The electric vertical take-off and landing aircraft of any one of clauses 3 to 15, wherein a maximum value of the larger range is no less than 85°.
17. The electric vertical take-off and landing aircraft of any one of clauses 4 to 16, wherein:
   the electrical propulsion unit comprises a plurality of blades;
   the pitch arrangement comprising a plurality of input couplings, each input coupling of the plurality of input couplings is moveable along a respective pitch input path of the electrical propulsion unit to vary a pitch of a respective blade of the plurality of blades; and
   the first end of the linkage is coupled to the plurality of input couplings of the pitch arrangement.
18. The electric vertical take-off and landing aircraft of any one of the preceding clauses, wherein the pitch mechanism is configured such that tilting the electrical propulsion unit relative to the airframe from the wing-borne flight configuration to the thrust-borne flight configuration causes the pitch of the blade to reduce.
19. An electric vertical take-off and landing aircraft comprising:
   an airframe;
   an electrical propulsion unit comprising a blade;
   a tilt actuator configured to vary a tilt angle of the electrical propulsion unit relative to the airframe to tilt the electrical propulsion unit relative to the airframe between a wing-borne flight configuration and a thrust-borne flight configuration; and
   a pitch mechanism comprising a pitch actuator configured to vary a pitch of the blade;
   wherein:
      the pitch mechanism is configured:
      to mechanically limit a range within which the pitch actuator can vary the pitch of the blade to: a larger range when the electrical propulsion unit is in the wing-borne flight configuration; and a smaller range when the electrical propulsion unit is in the thrust-borne flight configuration; and
      such that tilting the electrical propulsion unit relative to the airframe from the wing-borne flight configuration to the thrust-borne flight configuration causes the pitch of the blade to change from being within the larger range to being within the smaller range.
20. An electric vertical take-off and landing aircraft comprising:
   an airframe;
   an electrical propulsion unit comprising a blade;
   a tilt actuator configured to vary a tilt angle of the electrical propulsion unit relative to the airframe to tilt the electrical propulsion unit relative to the airframe between a wing-borne flight configuration and a thrust-borne flight configuration; and
   a pitch mechanism comprising a pitch actuator configured to vary a pitch of the blade;
   wherein the pitch mechanism is configured such that tilting the electrical propulsion unit relative to the airframe from the wing-borne flight configuration to the thrust-borne flight configuration causes the pitch of the blade to reduce.

## Claims

1. An electric vertical take-off and landing aircraft comprising:
an airframe;
an electrical propulsion unit comprising a blade, the electrical propulsion unit configured to be tiltable relative to the airframe between a wing-borne flight configuration and a thrust-borne flight configuration; and
a pitch mechanism comprising a pitch actuator configured to vary a pitch of the blade;
wherein the electric vertical take-off and landing aircraft is configured to limit a range within which the pitch actuator can vary the pitch of the blade to:
a larger pitch range when the electrical propulsion unit is in the wing-borne flight configuration; and
a smaller pitch range when the electrical propulsion unit is in the thrust-borne flight configuration.

2. The electric vertical take-off and landing aircraft of claim 1, wherein the electric vertical take-off and landing aircraft comprises a controller configured to control the pitch actuator to vary the pitch of the blade based on an airspeed of the electric vertical take-off and landing aircraft.

3. The electric vertical take-off and landing aircraft of any one of the preceding claims, wherein the electric vertical take-off and landing aircraft is configured to mechanically limit the range within which the pitch actuator can vary the pitch of the blade to: the larger pitch range when the electrical propulsion unit is in the wing-borne flight configuration; and the smaller pitch range when the electrical propulsion unit is in the thrust-borne flight configuration.

4. The electric vertical take-off and landing aircraft of any one of the preceding claims, wherein the electric vertical take-off and landing aircraft is configured such that tilting the electrical propulsion unit relative to the airframe from the wing-borne flight configuration to the thrust-borne flight configuration causes the pitch of the blade to change from being within the larger pitch range to being within the smaller pitch range.

5. The electric vertical take-off and landing aircraft of any one of the preceding claims, wherein:
the electrical propulsion unit comprises a hub;
the blade is rotatably coupled to the hub and comprises a pitch coupling, which is movable along a pitch input path to rotate the blade relative to the hub in order to vary a pitch of the blade;
the pitch mechanism comprises a linkage comprising a first end coupled to the pitch actuator and a second end coupled to the pitch coupling, the pitch actuator configured to impart a first range of motion, along an actuator output path, to the first end of the linkage and, via the linkage, a second range of motion, along the pitch input path, to the pitch coupling in order to vary the pitch of the blade; and
the pitch mechanism is configured, for a given first range of motion along the actuator output path, to impart a relatively greater second range of motion to the pitch coupling along the pitch input path when the electrical propulsion unit is in the wing-borne flight configuration and a relatively smaller second range of motion to the pitch coupling along the pitch input path when the electrical propulsion unit is in the thrust-borne flight configuration.

6. The electric vertical take-off and landing aircraft of claim 5, wherein:
the given first range of motion is a maximum range of motion for the first end of the linkage; and
the maximum range of motion imparts a relatively greater maximum second range of motion to the pitch coupling along the pitch input path when the electrical propulsion unit is in the wing-borne flight configuration and a relatively smaller maximum second range of motion to the pitch coupling along the pitch input path when the electrical propulsion unit is in the thrust-borne flight configuration.

7. The electric vertical take-off and landing aircraft of claim 5 or claim 6, wherein:
the airframe comprises a yaw axis and a roll axis; and
the actuator output path comprises a smaller component parallel to the yaw axis and a larger component parallel to the roll axis, such that:
when the electrical propulsion unit is in the wing-borne flight configuration, the larger component is parallel to the pitch input path; and
when the electrical propulsion unit is in the thrust-borne flight configuration, the smaller component is parallel to the pitch input path.

8. The electric vertical take-off and landing aircraft of claim 7, wherein the smaller component is no greater than 25% of the larger component.

9. The electric vertical take-off and landing aircraft of any one of the preceding claims, wherein a maximum value of the smaller pitch range is less than at least one of:
a maximum value of the larger pitch range; and
a minimum value of the larger pitch range.

10. The electric vertical take-off and landing aircraft of claim 9, wherein the pitch mechanism is configured such that a minimum clearance between the actuator output path and the electrical propulsion unit is greater when the electrical propulsion unit is in the thrust-borne flight configuration than when the electrical propulsion unit is in the wing-borne flight configuration.

11. The electric vertical take-off and landing aircraft of any one of the preceding claims, wherein a difference between a maximum value of the smaller pitch range and a minimum value of the smaller pitch range is no greater than 10°.

12. The electric vertical take-off and landing aircraft of any one of the preceding claims, wherein the smaller pitch range has a maximum value of no greater than 25°.

13. The electric vertical take-off and landing aircraft of any one of the preceding claims, wherein a difference between a maximum value of the larger pitch range and a minimum value of the larger pitch range is no less than 20°.

14. The electric vertical take-off and landing aircraft of any one of the preceding claims, wherein a maximum value of the larger pitch range is no less than 85°.

15. The electric vertical take-off and landing aircraft of any one of the preceding claims, wherein the pitch mechanism is configured such that tilting the electrical propulsion unit relative to the airframe from the wing-borne flight configuration to the thrust-borne flight configuration causes the pitch of the blade to reduce.
